Europäisches Patentamt

European Patent Office

Office européen des brevets

(19)

(11) Veröffentlichungsnummer : **0 146 679**
**B1**

(12) # EUROPÄISCHE PATENTSCHRIFT

(45) Veröffentlichungstag der Patentschrift :
15.06.88

(51) Int. Cl.⁴ : **G 01 D 3/04**

(21) Anmeldenummer : 84108476.7

(22) Anmeldetag : 18.07.84

(54) Schaltungsanordnung zur Temperaturkompensation eines Messumsetzers.

(30) Priorität : 09.11.83 DE 3340409

(43) Veröffentlichungstag der Anmeldung :
03.07.85 Patentblatt 85/27

(45) Bekanntmachung des Hinweises auf die Patenterteilung : 15.06.88 Patentblatt 88/24

(84) Benannte Vertragsstaaten :
DE FR GB IT SE

(56) Entgegenhaltungen :
DE-B- 2 419 914
GB-A- 2 110 383

(73) Patentinhaber : VDO Adolf Schindling AG
Gräfstrasse 103
D-6000 Frankfurt/Main (DE)

(72) Erfinder : Hahlganss, Günter
Breslauer Strasse 29
D-6239 Kriftel (DE)
Erfinder : Werner, Günther
Am alten Bach 10
D-6370 Oberursel 4 (DE)

(74) Vertreter : Könekamp, Herbert, Dipl.-Ing.
Sodener Strasse 9
D-6231 Schwalbach (DE)

EP 0 146 679 B1

**Beschreibung**

Die Erfindung betrifft eine Schaltungsanordnung zur Temperaturkompensation eines Messwertumsetzers nach dem Oberbegriff des Anspruchs 1.

In derartigen Widerstands-Induktivitätsoszillatoren wird generell die Verschiebung eines Spulenkerns in einer Spule, die die Messfrequenz beeinflussende Induktivität bildet, in eine annähernd proportionale Frequenzänderung umgesetzt. Ein solcher bekannter Widerstands-Induktivitätsoszillator umfasst als die Messfrequenz beeinflussende Elemente eine Sensorspule, in der der Kern verschiebbar ist, sowie einen in Reihe zu der Sensorspule geschalteten Fühlerwiderstand. An dem Fühlerwiderstand kann eine Fühlerspannung abgegriffen werden, die dem Strom in der Sensorspule proportional ist. Die Sensorspule kann mit einem elektronischen Spulen- und Schwellwertumschalter mit der Messfrequenz so umgeschaltet werden, dass die Spule wechselweise mit einem positiven und einem negativen Pol einer Betriebsspannungsquelle verbunden wird. Der Anstieg des Spulenstroms wird durch den Fühlerwiderstand erfasst und einem Komparator zugeführt, dessen Ausgang den Spulen- und Schwellenwertumschalter steuert. Der Schwellenwert wird durch einen die Betriebsspannung teilenden Spannungsteiler erzeugt, der mit der positiven und negativen Betriebsspannung gespeist wird. Ein sogenannter Hysteresewiderstand ist durch den Spulen- und Schwellwertumschalter wahlweise zu einem der beiden Teilerwiderstände parallel schaltbar, so dass sich das Teilerverhältnis entsprechend ändert. Ein Teilerabgriff zwischen beiden Teilerwiderständen ist an einen Eingang des Komparators angeschlossen.

Ein solcher Widerstands-Induktivitätsoszillator zeigt einen annähernd linearen Kennlinienverlauf der Abhängigkeit der Frequenz von dem Weg, den ein Spulenkern in der Sensorspule zurücklegt. Fehler durch Nichtlinearität der Kennlinie können durch Begrenzung des Hubs eingeschränkt werden, so dass nur noch ein verhältnismässig linearer Teil der Kennlinie benutzt wird. Ausserdem zeigt der Widerstands-Induktivitätsoszillator einen Temperaturfehler, der insbesondere auf Widerstandsänderungen in der Sensorspule in Abhängigkeit von der Temperatur zurückzuführen ist.

Zur Temperaturkompensation von Spulen, hier der Sensorspule, ist es bereits generell bekannt, in Reihe zu der Spule einen Kompensationswiderstand zu schalten, dessen Temperaturfaktor im Unterschied zu demjenigen der Sensorspule negativ ist (die Sensorspule, die normalerweise aus Kupferdraht besteht, hat dementsprechend einen positiven Temperaturkoeffizienten). — Es hat sich jedoch gezeigt, dass mit einem Kompensationswiderstand der Temperaturfehler eines Widerstands-Induktivitätsoszillators nur begrenzt kompensiert werden kann. Dies ist vor allem darauf zurückzuführen, dass der Kompensationswiderstand nie genau die gleiche Temperatur wie die Sensorspule annehmen kann, denn beide Bauelemente sind räumlich voneinander getrennt. Ausserdem ist es schwierig, zwei Widerstände zu finden, die genau den gleichen Betrag des Temperaturkoeffizienten bei entgegengesetztem Vorzeichen haben.

Der vorliegenden Erfindung liegt daher die Aufgabe zu Grunde, die Temperaturkompensation von Messwertumsetzern, die einen Widerstands-Induktivitätsoszillator aufweisen, zu verbessern. Es soll nicht notwendig sein, eine enge räumliche Beziehung zwischen der Sensorspule und einem Kompensationsschaltelement zu schaffen, vielmehr soll ein solches Kompensationsschaltelement entfallen. Trotzdem soll die Temperaturkompensation in dem gesamten Messbereich bzw. Umsetzbereich exakt erfolgen.

Diese Aufgabe wird durch die in dem kennzeichnenden Teil des Anspruchs 1 angegebenen Maßnahmen gelöst.

Das Wesen der beanspruchten Erfindung besteht darin, dass von den Elementen, die den Temperaturfehler im wesentlichen verursachen, nämlich der Sensorspule und dem Fühlerwiderstand, ein Signal abgeleitet wird, welches ein Maß für den Temperaturfehler ist, so dass eine weitgehende Kompensation mit relativ wenig aufwendigen Mitteln elektronisch durchgeführt werden kann. Hierzu sind die Sensorspule und der Fühlerwiderstand frequenzbeeinflussende Elemente eines zweiten Oszillators zusammen, der eine Hilfsfrequenz erzeugt. Aus dem Verhältnis der Messfrequenz zu der Hilfsfrequenz kann mit wenig aufwendigen Mitteln ein Korrekturfaktor abgeleitet werden, mit dem die Messfrequenz zu multiplizieren ist, um den Temperaturfehler weitgehend zu korrigieren. Vorteilhaft ist dabei u.a., dass die Schaltung zur Erzeugung der Messfrequenz im wesentlichen unverändert bleibt, da insbesondere kein Kompensationswiderstand zuzuschalten und bei der Dimensionierung zu berücksichtigen ist. Vorteilhaft ist nach Anspruch 2 der zweite Oszillator zur Erzeugung der Hilfsfrequenz ebenfalls ein Widerstands-Induktivitätsoszillator unter Einbeziehung der Sensorspule und des Fühlerwiderstandes, so daß dessen Temperaturgang in gleicher Weise beeinflußt wird wie der des ersten Oszillators zur Bildung der Meßfrequenz, da die übrigen Elemente der Oszillatoren dem gleichen Temperaturgang unterliegen. Deswegen kann ein einfacher Korrekturfaktor für die Messfrequenz gebildet werden.

Vorzugsweise sind die beiden Widerstands-Induktivitätsoszillatoren mit ihren übrigen die Messfrequenz und die Hilfsfrequenz bestimmenden Elementen so dimensioniert, dass die Messfrequenz grösser als die Hilfsfrequenz ist. — Die Dimensionierung wird im Falle einer Ausführung der Widerstands-Induktivitätsoszillatoren mit einem Komparator und einem Schwellwerte des Komparaturs bildenden Eingangsnetzwerk insbesondere durch Dimensionierung des Eingangsnetzwerks erreicht. — Die Bemessung der Hilfsfrequenz in Bezug auf die Messfrequenz nach Anspruch 3 hat den Vorteil, dass hier durch die Quotientenbildung das Signal bzw. die Daten, die den Temperaturfehler darstellen, besonders gross

ist. Deswegen kann aus diesem Signal in wenig aufwendiger Weise ein Korrekturfaktor für die Messfrequenz abgeleitet werden.

Als besonders vorteilhaft hat sich eine Dimensionierung nach Anspruch 4 herausgestellt, bei der die Messfrequenz das Zweifache der Hilfsfrequenz beträgt.

Gemäss Anspruch 5 wird vorteilhaft ein Korrekturrechner, der zur Bildung der Korrekturfaktors vorgesehen ist, auch zur Steuerung der Umschalteinrichtung verwendet, die dafür sorgt, dass die Sensorspule und die Fühlerspule jeweils mit einem der übrigen Elemente der ersten Widerstands-Induktivitätsoszillators oder zweiten Widerstands-Induktivitätsoszillators frequenzbestimmend verbunden sind.

Die Bildung des Korrekturfaktors erfolgt besonders exakt und unkompliziert, wenn die nach Anspruch 6 vorgesehenen Schaltungsmassnahmen vorgesehen sind. Damit werden die Widerstands-Induktivitätsoszillatoren ständig mit ihren Betriebsspannungen beaufschlagt, und es erfolgt eine Umschaltung der Eingangsnetzwerke, so dass die Widerstände der Netzwerke gleichmässig belastet werden. Da somit in gleichen Widerstands-Induktivitätsoszillatoren praktisch die gleichen Erwärmungsverhältnisse vorliegen, geben die Messfrequenz und die Hilfsfrequenz — ins Verhältnis zueinander gesetzt — den Temperaturgang der Sensorspule und des Fühlerwiderstands, nicht aber der übrigen Schaltungselemente der Widerstands-Induktivitätsoszillatoren wieder, so dass der durch die Sensorspule und den Fühlerwiderstand hervorgerufene Temperaturgang mit einem einfach angenäherten Korrekturfaktor kompensiert werden können.

In Anspruch 7 ist angegeben, wie die beiden Widerstands-Induktivitätsoszillatoren als Doppeloszillator mit der gleichen Sensorspule und dem Fühlerwiderstand wenig aufwendig im einzelnen zu realisieren sind. Die gesteuerte Umschalteinrichtung aktiviert jeweils eine Hälfte dieses Doppeloszillators bzw. einen Widerstands-Induktivitätsoszillator frequenzbestimmend, während die andere Hälfte bzw. der zweite Widerstands-Induktivitätsoszillator jeweils fremd gesteuert mitläuft. Die Fremdsteuerung kann dabei bedeuten, dass zwar ein Eingangsnetzwerk eines Widerstands-Induktivitätsoszillators umgeschaltet wird, nicht jedoch der zugehörige Komparator, da die von dem Fühlerwiderstand abgezweigte Fühlerspannung bereits die jeweils eingestellten Schwellwerte erreicht hatte.

Mit Anspruch 8 sind weitere vorteilhafte Schaltungsdetails der Widerstands-Induktivitätsoszillatoren, die mit einem Komparatur aufgebaut sind, angegeben. Hieraus ergibt sich, dass zur Umschaltung der Schwellwerte je eine Hysterese-Widerstand in dem Eingangsnetzwerk jedes Widerstands-Induktivitätsoszillators im Takt der Frequenz umgeschaltet wird, die von dem jeweils aktiven Widerstands-Induktivitätsoszillator erzeugt wird. Dabei liegt jeder Hysterese-Widerstand je nach der Schaltstellung des Spulen- und Schwellwertumschalters jeweils parallel zu dem einen oder anderen Teilerwiderstand und verändert dadurch den Schwellwert bzw. die Schaltschwelle des zugeordneten Oszillators. Jeder Hysterese-Widerstand wird dabei durch den gemeinsamen Spulen- und Schwellwertumschalter jeweils mit dem einen oder anderen Pol einer Betriebsspannungsquelle verbunden. Die Erweiterung eines zur Erzeugung der Messfrequenz eingerichteten Widerstands-Induktivitätsoszillators mit den vorgeschlagenen Korrekturmitteln bedingt also keinen weiteren Spulen- und Schwellwertumschalter. — Der Korrekturfaktor, mit dem die Messfrequenz korrigiert wird, geht bei einer beliebig wählbaren Temperatur von einem bestimmten Frequenzverhältnis der Messfrequenz zur Hilfsfrequenz aus. Um dieses Frequenzverhältnis abstimmen zur können, genügt es, einen der beiden Hysteresewiderstände beider Oszillatoren abzugleichen.

Vorteilhaft sind die Widerstände der Eingangsnetzwerke gemäss Anspruch 9 ausgeführt. — Hiermit können symmetrische Eingangsnetzwerke bzw. Spannungsteiler geschaffen werden, die dem gleichen Temperatureinfluss unterliegen. Wie oben angedeutet, kann einer der beiden Hysteresewiderstände dabei als Festwiderstand ausgeführt sein, während nur der zweite Hysteresewiderstand fein abgleichbar sein soll. Damit können auch Unsymmetrien der beiden Spannungsteiler in ihren Auswirkungen auf das Frequenzverhältnis beseitigt werden.

Die Mittel zur Einführung des Korrekturfaktors sind in Anspruch 10 angegeben und zeichnen sich durch leichte Realisierbarkeit aus. In den Korrekturfaktor geht als einzige Variable im Betrieb der Schaltungsanordnung das Verhältnis der Messfrequenz zur Hilfsfrequenz ein, während die übrigen Glieder des Korrekturfaktors einmal vor Inbetriebnahme empirisch und/oder rechnerisch in der angegebenen Weise ermittelt werden können. Darin kann der Subtrahent S ermittelt werden aus dem Verhältnis der Messfrequenz zur Hilfsfrequenz bei einer wählbaren Abgleichtemperatur. Vorzugsweise wird der Abgleich beider Oszillatoren bei 20 °C vorgenommen.

Dann gilt :

$$S = \frac{f_1 \, \vartheta_0}{f_2 \, \vartheta_0} = \frac{f_1 \, 20\,°C}{f_2 \, 20\,°C} = 2,000$$

ist anzustreben.

Der Faktor K beinhaltet das Verhältnis der prozentualen Frequenzänderung des Meßoszillators 1 in einem maximalen Temperaturbereich, zur prozentualen Änderung des Frequenzverhältnisses beider Oszillatoren in einem maximalen Temperaturbereich. Vorzugsweise wird K bei 70 °C ermittelt.

Dann gilt :

$$K = \frac{\left[\dfrac{f_1\,\vartheta_0}{f_1\,\vartheta} - 1{,}0\right]}{\left[\dfrac{f_1\,\vartheta}{f_2\,\vartheta} - 2{,}0\right]} = \frac{\left[\dfrac{f_1\,20\,°C}{f_1\,70\,°C} - 1{,}0\right]}{\left[\dfrac{f_1\,70\,°C}{f_2\,70\,°C} - 2{,}0\right]}$$

Mit diesen Verhältnissen kann man bei einer Temperatur von 50 °C z.B. folgenden Korrekturfaktor KF angeben.

$$KF = 1 + \frac{\left[\dfrac{f_1\,50\,°C}{f_2\,50\,°C} - 2{,}0\right]\left[\dfrac{f_1\,20\,°C}{f_1\,70\,°C} - 1{,}0\right]}{\left[\dfrac{f_1\,70\,°C}{f_2\,70\,°C} - 2{,}0\right]}$$

Es werden also lineare Verhältnisse angenommen und eine lineare Interpolation mittels KF zur Korrektur durchgeführt.

Die Erfindung wird im folgenden anhand einer Zeichnung mit sechs Figuren erläutert. Es zeigen :

Fig. 1 ein Ausführungsbeispiel eines Doppel-Oszillators in einem vereinfachten Schaltbild,

Fig. 2 ein Schaltbild einer Einzelheit, des Spulen- und Schwellwertumschalters nach Fig. 1,

Fig. 3 eine weitere Einzelheit in einem Schaltbild, d.h. die gesteuerte Umschalteinrichtung,

Fig. 4 eine schematische Darstellung eines Elements in Fig. 1, nämlich des abgleichbaren Hysterese-Widerstands,

Fig. 5 den zeitlichen Verlauf der Fühlerspannung und

Fig. 6 die Änderung der Frequenz des Messoszillators als eines Teils des Doppeloszillators in Abhängigkeit von der Temperatur.

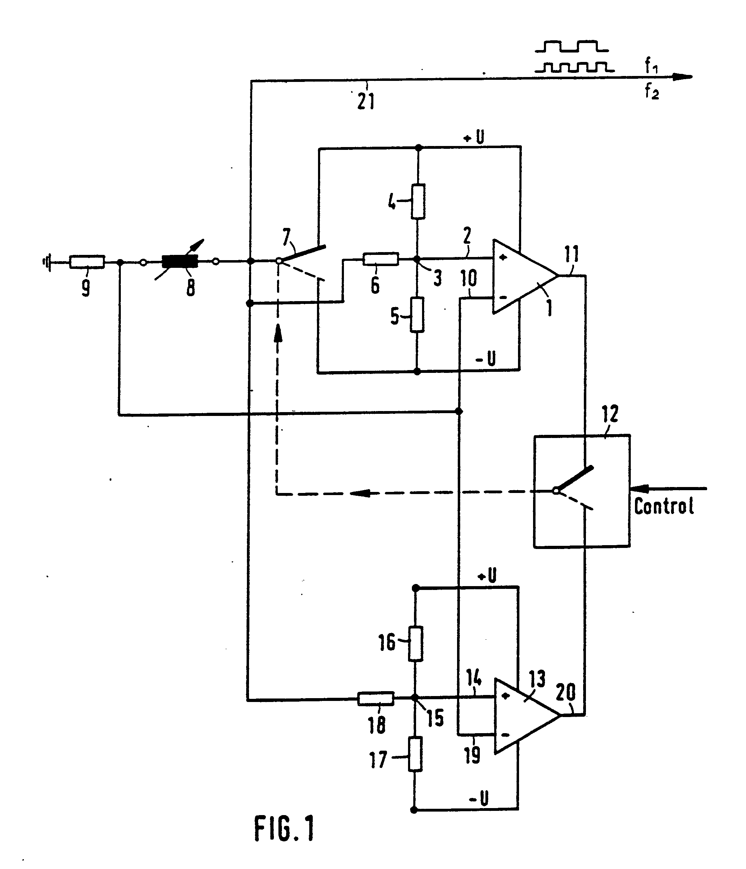

In Figur 1 ist mit 1 ein Komparator eines ersten Widerstands-Induktivitätsoszillators bezeichnet, der zur Erzeugung einer Messfrequenz f1 vorgesehen ist. Ein positiver Eingang 2 des Komparators ist mit einem Teilerabgriff 3 eines Spannungsteilers verbunden, der zwei Teilerwiderstände 4, 5 gleicher Widerstandswerte aufweist. Zu jedem der beiden Teilerwiderstände ist wahlweise ein Hysteresewiderstand 6 über einen Spulen- und Schwellwertumschalter 7 parallel schaltbar. Über den Spulen- und Schwellwertumschalter 7 kann der Hysteresewiderstand 6 jeweils mit einem Plus- oder Minuspol der Betriebsspannungsquelle verbunden werden, der auch den Spannungsteiler 4, 5 und den Komparator 1 speist. Die Betriebsspannung ist stabilisiert.

Wechselweise mit dem positiven oder negativen Pol der Betriebsspannung + U oder — U ist ferner die Reihenschaltung einer Sensorspule 8 mit dem Fühlerwiderstand 9 verdindbar. Die Induktivität der Sensorspule ist durch einen längs einem Weg verschiebbaren Spulenkern variabel.

Von dem Fühlerwiderstand 9 führt eine Leitung zu einem negativen Eingang 10 des Komparators 1.

Ein Ausgang 11 des Komparators steuert in der gezeigten Stellung einer Schalteinrichtung 12 den Spulen- und Schwellwertumschalter 7. Von diesem Spulen- und Schwellwertumschalter ist weiterhin die von der Meßfrequenz f1 abgeleitete Ausgangsfrequenz f abgreifbar.

Der Spulen- und Schwellwertumschalter 7, die Sensorspule 8 und der Fühlerwiderstand 9 gehören nicht nur zu dem ersten Widerstands-Induktivitätsoszillator, sondern auch zu einem zweiten Widerstands-Induktivitätsoszillator mit einem zweiten Komparator 13. Ein positiver Eingang 14 des zweiten Komparators ist wiederum mit einem Teilerabgriff 15 eines Spannungsteilers verbunden, der die Teilerwiderstände 16, 17 aufweist. Die Teilerwiderstände haben vorzugsweise gleichen Widerstandswert untereinander wie die Teilerwiderstände 4, 5. Sie werden wiederum von der stabilisierten Betriebsspannungsquelle mit den Potentialen + U und — U beaufschlagt. Ein zweiter Hysteresewiderstand 18 verbindet den Teilerabgriff 15 mit dem Spulen- und Schwellwertumschalter 7. — Der Fühlerwiderstand 9 ist wiederum mit einem negativen Eingang 19 des zweiten Komparators 13 verbunden.

Von einem Ausgang 20 des zweiten Komparators wird der Spulen- und Schwellwertumschalter 7 im Takt der Ausgangsfrequenz des Komparators gesteuert, wenn sich die Schalteinrichtung 12 in der unterbrochen gezeichneten Schaltstellung befindet. In diesem Fall sind die Sensorspule 8 und der Fühlerwiderstand 9 in Verbindug mit dem übrigen Elementen des zweiten Komparators zur Erzeugung einer Hilfsfrequenz f2 wirksam.

Die Messfrequenz f1 ist vorzugsweise auf den doppelten Wert der Hilfsfrequenz eingestellt. Dieses Frequenzverhältnis ergibt sich im wesentlichen aus der Dimensionierung des Widerstandsverhältnisses der Hysteresewiderstände 6 und 18, von denen jeder wechselweise einem der Teilerwiderstände 4, 5 bzw. 16, 17 parallel geschaltet wird. Entsprechend dem Spannungspotential, welches an den Teilerabgriffen 3 bzw. 15 auftritt, ist der Schwellwert oder der Schaltpunkt des Komparators 1 bzw. 13 eingestellt. Die Schaltschwellen bestimmen wiederum die Frequenzen, mit denen die Widerstands-Induktivitätszoszillatoren schwingen :

Beispielsweise ist in Figur 1 entsprechend der Stellung der Umschalteinrichtung 12 zunächst der obere erste Komparator 1 frequenzbestimmend. In der gezeichneten Stellung des Spulen- und Schwellwertumschalters 7 fliesst in der Reihenschaltung der Sensorspule 8 mit dem Fühlerwiderstand 9 so lange ein ansteigender Strom, bis die an dem Fühlerwiderstand abfallende Fühlerspannung die Schaltschwelle des Komparators 1 erreicht hat, die durch die Parallelschaltung des ersten Hysteresewiderstands 6 zu dem Teilerwiderstand 4 bestimmt ist. Bei Erreichen der Schaltschwelle schaltet der Komparator durch ein Signal an seinem Ausgang 11 den Spulen- und Schwellwertumschalter 7 um : gestrichelte Stellung. Jetzt wird das Potential der Schaltschwelle durch die Parallelschaltung des ersten Hysteresewiderstands 6 zu dem Teilerwiderstand 5 auf negatives Potential heruntergezogen, und die Sensorspule 8 wird ebenso wie der Fühlerwiderstand 9 in entgegengesetzter Richtung von einem Strom durchflossen, der wiederum nach einer Ausgleichsfunktion verläuft, deren Zeitkonstante durch die jeweilige Induktivität der Sensorspule abhängig von der Kernstellung und dem Ladewiderstand im Sensorkreis, im wesentlichen bestimt durch den Fühlerwiderstand 9 und den Innenwiderstand der Sensorspule bestimmt ist. Wenn die an dem Fühlerwiderstand abfallende Fühlerspannung die jetzt vorgegebene Schaltschwelle des ersten Komparators erreicht, erfolgt wiederum ein Umschaltvorgang in die gezeichnete Stellung des Spulen- und Schwellwertumschalters 7.

Aus dem Vorstehenden ergibt sich, dass das Signal an dem Ausgang 11 mit einer Messfrequenz f1 verläuft, die von den Schaltschwellen des ersten Komparators und der Zeitkonstante der Stromänderung an der Sensorspule und in dem Fühlerwiderstand abhängt.

Der gleiche Zusammenhang gilt, wenn in der unterbrochen gezeichneten Stellung der Umschalteinrichtung 12 der zweite Komparator 13 jetzt frequenzbestimmend wirksam wird, da sein Ausgang 20 die Umsteuerung des Spulen- und Schwellwertumschalters 7 bewirkt. Diese Hilfsfrequenz ist aber wie oben erwähnt vorzugsweise durch die Dimensionierung des zweiten Hysteresewiderstands 18 auf einen von der Messfrequenz abweichenden Wert, vorzugsweise die halbe Frequenz, eingestellt. Dadurch werden Frequenzänderungen infolge eines Temperaturganges des Kupferwiderstandes der Sensorspule 8 besonders deutlich.

Aus Figur 1 ergibt sich, dass beide Komparatoren mit ihren Spannungsteilern ständig an der Betriebsspannungsquelle liegen, unabhängig von der Stellung der Umschalteinrichtung 12. Darüber hinaus werden jeweils beide Hysteresewiderstände 6, 18 durch diesen Umschalter umgeschaltet. Jedoch erfolgt die Umschaltung des Hysteresewiderstandes, der zu dem nicht-frequenzbestimmenden Komparator gehört, mit der Frequenz des anderen, frequenzbestimmenden Komparators. Dadurch werden bei dem Betrieb der Schaltungsanordnung gleichmässige Temperaturverhältnisse in den beiden Komparatoren und zugehörigen Eingangsnetzwerken erreicht, so dass ein exakter Korrekturfaktor für die Messfrequenz gebildet werden kann, der die Temperatureinflüsse auf die Sensorspule ausgleicht.

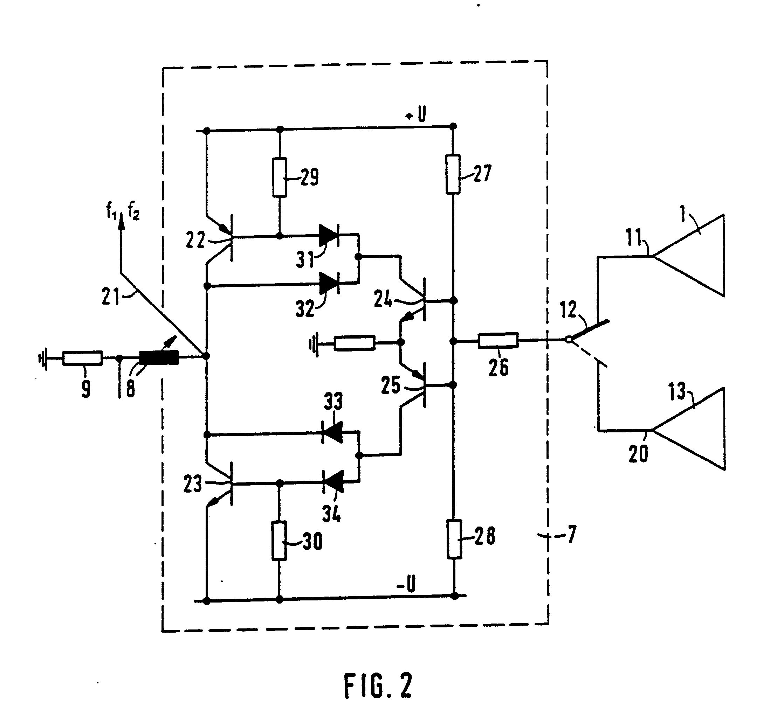

In Figur 2 ist eine Realisierung des Spulen- und Schwellwertumschalters als Transistorschaltung dargestellt.

Dabei sind wie in den übrigen Figuren gleiche Elemente mit übereinstimmenden Bezugszeichen bezeichnet.

Der Spulen- und Schwellenwertumschalter 7 nach Figur 2 erhält ein Steuersignal von einem der Ausgänge 11 und 20 der Komparatoren 1, 3 je nach der Stellung der Umschalteinrichtung 12.

Die Sensorspule 8 und der Fühlerwiderstand 9 werden ebenso wie eine Leitung 21, an die die Hysteresewiderstände 6, 18 in Figur 1 angeschlossen sind und von der die Ausgangsfrequenz f entnommen werden kann, durch je einen von zwei Schalttransistoren 22, 23 mit je einem Pol der stabilisierten Betriebsspannungsquelle verbunden. Die Schalttransistoren 22, 23 werden über zwei weitere Transistoren 24, 25 in Emitterfolgeschaltung gesteuert. Hierzu sind die Basisanschlüsse der Transistoren 24, 25 über einen Vorwiderstand 26 mit dem Ausgang der Schalteinrichtung 12 gekoppelt. Zur Vorspannungserzeugung an den Basisanschlüssen dienen Teilerwiderstände 27, 28. Zu jedem Schalttransistor 22, 23 gehört eine aus einem Basiswiderstand 29 bzw. 30 und Dioden 31, 32 bzw. 33, 34 gebildete Anordnung, mit der insbesondere Sättigungsladungen der Transistoren 22, 23 vermieden werden sollen.

Zu der gesamten Schaltungsanordnung zur Temperaturkompensation gehört ferner ein Korrekturrechner, der aus der über eine Leitung 21 wahlweise eingespeisten Messfrequenz und Hilfsfrequenz deren Quotienten bildet und der zur Steuerung der Umschalteinrichtung 12 dient. Der Korrekturrechner ist mit 36 als Block angedeutet, da sein innerer Aufbau nicht Gegenstand der Erfindung ist.

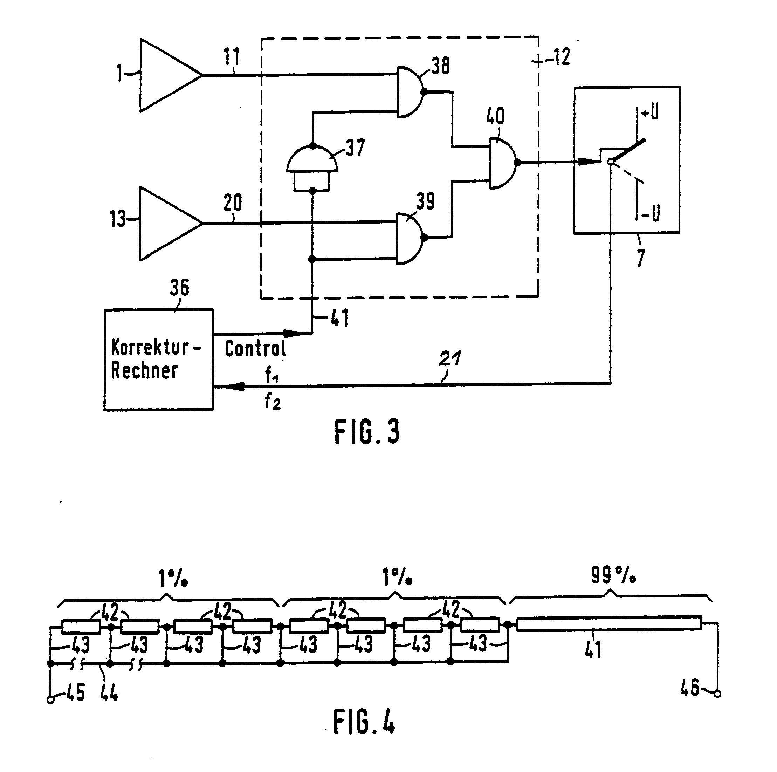

Die Umschalteinrichtung 12 ist nach Fig. 3 mit vier NAND-Gliedern 37-40 aufgebaut, von denen das NAND-Glied 37 lediglich als Negationsstelle dient. Aus figur 3 kann ohne weiteres entnommen werden, wie die NAND-Glieder 38, 39 einerseits mit einem Ausgang 11 bzw. 20 der Komparatoren 1, 13 verbunden sind, während je ein weiterer Eingang jedes dieser NAND-Glieder mit einem Steuersignal über eine Leitung 41 von dem Korrekturrechner beaufschlagt wird, und zwar das NAND-Glied 38 mit dem invertierten Signal. Demzufolge wird jeweils der Ausgang 11 oder 20 über das NAND-Glied 40 zur Betätigung des Spulen- und Schwellwertschalters 7 durchgeschaltet.

Der Korrekturrechner ist so eingerichtet, dass er mit voreingestellten Parametern S und K aus der Messfrequenz und der Hilfsfrequenz den Korrekturfaktor

$$KF = 1 + \left( \frac{f_1 \vartheta}{f_2 \vartheta} - S \right) \cdot K$$

bildet und diesen Korrekturfaktor mit der Messfrequenz zur Ausgabe der Grösse einer temperaturfehlerkompensierten Messfrequenz multipliziert. In den Korrekturfaktor geben die Messfrequenz $f_1\,\vartheta$ und die Hilfsfrequenz $f_2\,\vartheta$ als Quotient ein. Diese Frequenzen werden bei der jeweils aktuellen Temperatur der Sensorspule 8 nach Massgabe der Steuerung über die Leitung 41 gebildet und in den Korrekturrechner über die Leitung 21 eingespeist. In der Korrekturformel hat der Subtrahent die Grösse

$$S = \frac{f_1\,\vartheta_0}{f_2\,\vartheta_0},$$

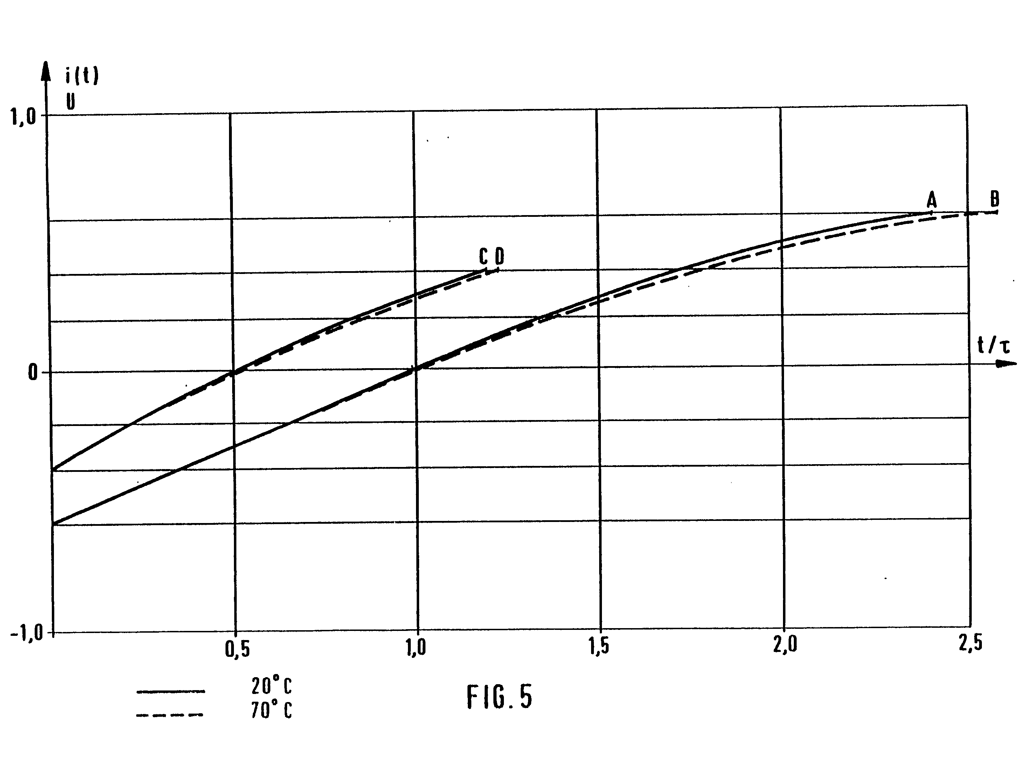

wobei diese Messfrequenz und Hilfsfrequenz für eine wählbare Temperatur gelten, bei der der Abgleich der beiden Widerstands-Induktivitätsoszillatoren auf ein bestimmtes Frequenzverhältnis durchgeführt wird. Die Konstante K kann schliesslich, wie eingangs angegeben, berechnet werden, lässt sich aber auch durch den gemessenen Verlauf der Fühlerspannungen bei verschiedenen Temperaturen ermitteln, siehe Figur 5.

In Figur 5 sind die Fühlerspannungen, die dem Strom in der Sensorspule proportional sind, bezogen auf die normierte Zeit t/Tau dargestellt. Die Darstellungen beziehen sich auf den Zeitpunkt ab Verbinden der Sensorspule mit einem anderen Pol der Betriebsspannungsquelle bis zum Erreichen der Schaltschwelle. Insbesondere sind in Figur 5 Kurven A und B der Fühlerspannung des Widerstands-Induktivitätsoszillators zur Erzeugung der Hilfsfrequenz bezeichnet, während die Kurven C, D bei aktivem Betrieb des Widerstands-Induktivitätsoszillators zur Erzeugung der Messfrequenz ermittelt wurden. Die mit einer durchgezogenen Linie dargestellten Kurven A, C wurden bei 20 °C ermittelt, die unterbrochen gezeichneten Kurven B, D hingegen bei 70 °C. Es ist aus Figur 5 ohne weiteres zu erkennen, dass der Abstand der Kurven A, B beim Erreichen der Schaltschwelle (T/Tau = 2,5) wesentlich grösser ist als der Abstand der Kurven C, D ebenfalls beim Erreichen der Schaltschwelle (T/Tau = 1,25). Die den Kurven A, B entsprechende relativ niedrige Hilfsfrequenz eignet sich daher besonders gut zur Korrektur des Temperaturfehlers der Messfrequenz, die den Kurven C, D entspricht.

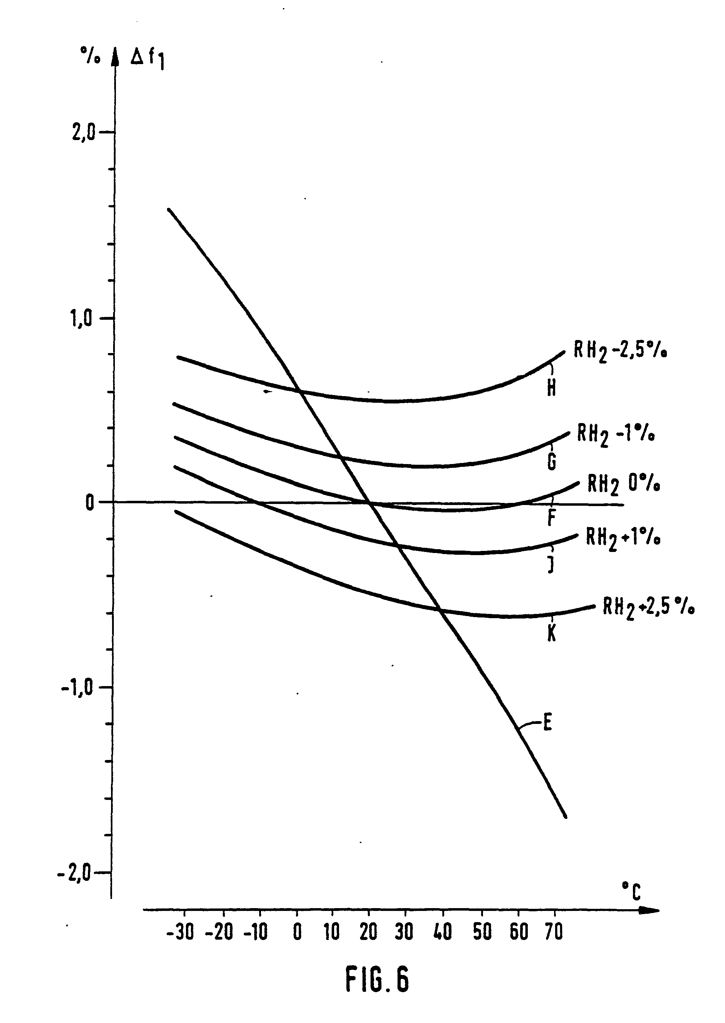

Aus Figur 6 ist ersichtlich, wie der durch Temperaturänderung hervorgerufene Fehler der Messfrequenz — Kurvenzug E — mit der erfindungsgemässen Schaltung kompensiert werden kann : Kurvenzug F. Wenn die beiden Widerstands-Induktivitätsoszillatoren nicht in der der Berechnung zu Grunde liegenden Weise genau abgeglichen sind — Kurvenzüge G — K — verläuft die Messfrequenz immer noch wesentlich konstanter als ohne Kompensation.

Zum genauen Abgleich der Hilfsfrequenz zur Messfrequenz wird der zweite Hysteresewiderstand besonders zweckmässig gemäss Figur 4 ausgebildet, während der erste Hysteresewiderstand und die Teilerwiderstände 4, 5, 16, 17 als Festwiderstände ausgebildet sein können. In Figur 4 ist der zweite Hysteresewiderstand als Teil einer monolithischen Ausführung der Widerstände schematisch dargestellt. Er besteht aus einem grösseren Teilwiderstand 41 und kleineren Teilwiderständen 42. Von den Teilwiderständen führen Abgleichleitungen 43 nach aussen, die durch Leiterbahnbrücken 44 überbrückt sind. Durch Auftrennen einzelner Leiterbahnbrücken lässt sich dann der zwischen den Klemmen 45 und 46 messbare Widerstand genau abgleichen, so dass die der Berechnung zu Grunde liegende exakte Hilfsfrequenz $f_2$ erreicht wird, die zu der mit dieser Schaltung möglichen Minimierung des Messfrequenzfehlers gemäss Kurve F in Figur 6 führt.

**Patentansprüche**

1. Schaltungsanordnung zur Temperaturkompensation in einem Meßwertumsetzer, der einen Weg in eine Meßfrequenz umsetzt, mit einem ersten Widerstands-Induktivitätsoszillator (1-9), der als die Meßfrequenz (f1) beeinflussende Elemente eine Sensorspule (8) in Reihe zu einem Fühlerwiderstand (9) umfaßt, dadurch gekennzeichnet, daß die Sensorspule (8) und der Fühlerwiderstand (9) frequenzbeeinflussende Elemente eines zweiten Oszillators (7, 13-19) sind, durch den eine Hilfsfrequenz (f2) erzeugbar ist, wobei in elektronischen Mitteln (36) zur Korrektur der Meßfrequenz aus dem Verhältnis der Meßfrequenz (f1) zur Hilfsfrequenz (f2) ein temperaturabhängiger Korrekturfaktor bildbar und eine durch den Korrekturfaktor korrigierte Ausgangsmeßfrequenz erzeugbar ist.

2. Schaltungsanordnung nach Anspruch 1, dadurch gekennzeichnet, daß der zweite Oszillator ein Widerstands-Induktivitätsoszillator (7, 13-19) ist, daß die Hilfsfrequenz von der Meßfrequenz (f1) abweicht und daß durch eine Umschalteinrichtung (12) gesteuert die Mittel (36) zur Korrektur der Meßfrequenz (f1) wahlweise entweder mit der Meßfrequenz oder mit der Hilfsfrequenz beaufschlagt werden.

3. Schaltungsanordnung nach Anspruch 2, gekennzeichnet durch eine derartige Dimensionierung des ersten Widerstands-Induktivitätsoszillators (1-9) und des zweiten Widerstands-Induktivitätsoszillators (7, 13-19), daß die Meßfrequenz (f1) größer als die Hilfsfrequenz (f2) ist.

4. Schaltungsanordnung nach Anspruch 3, gekennzeichnet durch eine solche Dimensionierung des ersten Widerstands-Induktivitätsoszillators (1-9) und des zweiten Widerstands-Induktivitätsoszillators (7, 13-19), daß die Meßfrequenz (f1) das Zweifache der Hilfsfrequenz (f2) beträgt.

5. Schaltungsanordnung nach einem der vorhergehenden Ansprüche, dadurch gekennzeichnet, daß die Umschalteinrichtung (12) durch einen wahlweise mit der Meßfrequenz (f1) oder der Hilfsfrequenz (f2) gespeisten Korrekturrechner (36) steuerbar ist.

6. Schaltungsanordnung nach einem der vorhergehenden Ansprüche, dadurch gekennzeichnet, daß beide Widerstands-Induktivitätsoszillatoren (1-9 ; 7, 13-19) unabhängig von der Stellung der gesteuerten Umschalteinrichtung (12) mit allen Betriebsspannungen beaufschlagt sind und daß eine Eingangswiderstandsschaltung desjenigen der beiden Widerstands-Induktivitätsoszillatoren (1-9 ; 7, 13-19), der entsprechend der Stellung der Umschalteinrichtung (12) die Mittel (36) nicht frequenzbestimmend beaufschlagt, durch den anderen der beiden Widerstands-Induktivitätsoszillatoren (7, 13-19 ; 1-9) mit beaufschlagt wird.

7. Schaltungsanordnung nach einem der vorhergehenden Ansprüche, dadurch gekennzeichnet, daß der erste Widerstands-Induktivitätsoszillator (1-9) einen ersten Komparator (1) aufweist, dessen einer Eingang (10) mit dem Fühlerwiderstand (9) verbunden ist und dessen Schaltschwelle zwischen zwei Werten mit einem Spulen- und Schwellenwertumschalter (7) umschaltbar ist, der außerdem die Sensorspule (8) zwischen zwei Betriebsspannungen umschaltet und der mit der von dem ersten Komparator (1) abgegebenen Meßfrequenz (f1) steuerbar ist, und daß der Spulen- und Schwellenwertumschalter (7) außerdem mit einem zweiten Komparator (13), der Bestandteil des zweiten Widerstands-Induktivitätsoszillators (7, 13-19) ist, in Verbindung steht, dessen einer Eingang (19) ebenso wie der eine Eingang (10) des ersten Komparators (1) mit dem Fühlerwiderstand (9) verbunden ist und dessen Schaltschwelle mit dem Spulen- und Schwellwertumschalter (7) umschaltbar ist, und daß der Spulen- und Schwellwertumschalter (7) je nach der Stellung der gesteuerten Umschalteinrichtung (12) mit der Meßfrequenz (f1) oder mit der von dem Ausgang (20) des zweiten Widerstands-Induktivitätsoszillators (7, 13-19) abgeleiteten Hilfsfrequenz (f2) umschaltbar ist.

8. Schaltungsanordnung nach Anspruch 7, dadurch gekennzeichnet, daß ein die Schaltschwelle des ersten Komparators (1) bestimmender erster Spannungsteiler zwei Teilwiderstände (4, 5) aufweist, zu jeweils einem von denen ein erster Hysteresewiderstand (6) über den Spulen- und Schwellenwertumschalter (7) parallel schaltbar ist, und daß ein die Schaltschwelle des zweiten Komparators (13) bestimmender zweiter Spannungsteiler zwei Teilerwiderstände (16, 17) aufweist, zu jeweils einem von denen ein zweiter, abgleichbarer Hysteresewiderstand (18) über den Spulen- und Schwellwertumschalter (7) parallel schaltbar ist, und daß der zweite Hysteresewiderstand (18) auf ein definiertes Verhältnis der Meßfrequenz (f1) zu der Hilfsfrequenz (f2) abgestimmt ist.

9. Schaltungsanordnung nach Anspruch 8, dadurch gekennzeichnet, daß die Teilerwiderstände (4, 5 bzw. 16, 17) und der Hysteresewiderstand (6 bzw. 18) als integrierte Widerstände auf einem Chip in Dickschicht-, Dünnschicht- oder monolithischer Ausführung ausgebildet sind, und daß der zweite Hysteresewiderstand (18) mit einem Laser abgleichbar ist.

10. Schaltungsanordnung nach einem der vorhergehenden Ansprüche, dadurch gekennzeichnet, daß die Mittel (36) zur Korrektur der Meßfrequenz (f1) zur Ermittlung des Korrekturfaktors

$$KF = 1 + \left( \frac{f_1\,\vartheta}{f_2\,\vartheta} - S \right) \cdot K$$

eingerichtet sind, worin sind

$f_1\,\vartheta$ die Meßfrequenz bei einer Umgebungstemperatur $\vartheta$,

$f_2\,\vartheta$ die Hilfsfrequenz bei $\vartheta$,

$$S = \frac{f_1\,\vartheta_0}{f_2\,\vartheta_0},$$

wobei $\vartheta_0$ eine Temperatur ist, bei der der Abgleich durchgeführt wurde, und

K eine schaltungsspezifische Konstante, wobei zur Ermittlung der korrigierten Ausgangsmeßfrequenz die Meßfrequenz mit dem Korrekturfaktor KF multipliziert wird.

**Claims**

1. Circuit arrangement for temperature compensation in a measurement transducer which converts a distance into a measurement frequency, comprising a first resistance/inductance oscillator (1-9) which comprises as elements influencing the measurement frequency (f1) a sensor coil (8) in series with a sensing resistance (9), characterized in that the sensor coil (8) and the sensing resistance (9) are frequency-influencing elements of a second oscillator (7, 13-19) by means of which an auxiliary frequency (f2) can be generated, in which arrangement a temperature-dependent correction factor can be formed and an output measurement frequency corrected by the correction factor can be generated from the ratio between the measurement frequency (f1) and the auxiliary frequency (f2) in electronic means (36) for correcting the measurement frequency.

2. Circuit according to Claim 1, characterized in that the second oscillator is a resistance/inductance oscillator (7, 13-19), that the auxiliary frequency deviates from the measurement frequency (f1) and that, controlled by a change-over device (12), either the measurement frequency or the auxiliary frequency is applied to the means (36) for correcting the measurement frequency (f1).

3. Circuit according to Claim 2, characterized by the first resistance/inductance oscillator (1-9) and the second resistance/inductance oscillator (7, 13-19) being dimensioned in such a manner that the measurement frequency (f1) in higher than the auxiliary frequency (f2).

4. Circuit according to Claim 3, characterized by the first resistance/inductance oscillator (1-9) and the second resistance/inductance oscillator (7, 13-19) being dimensioned in such a manner that the measurement frequency (f1) is twice the auxiliary frequency (f2).

5. Circuit according to one of the preceding claims, characterized in that the change-over device (12) can be controlled by a correction computer (36) which is optionally fed with the measurement frequency (f1) or the auxiliary frequency (f2).

6. Circuit according to one of the preceding claims, characterized in that all operating voltages are applied to both resistance/inductance oscillators (1-9 ; 7, 13-19), independently of the position of the controlled change-over device (12), and that an input resistance circuit of the one of the two resistance/inductance oscillators (1-9 ; 7, 13-19) which does not load the means (36) in a frequency-determining manner in accordance with the position of the change-over device (12), is also loaded by the other one of the two resistance/inductance oscillators (7, 13-19 ; 1-9).

7. Circuit according to one of the preceding claims, characterized in that the first resistance/inductance oscillator (1-9) exhibits a first comparator (1), one input (10) of which is connected to the sensing resistance (9) and the switching threshold of which can be switched over between two values by means of a coil and threshold value change-over switch (7) which, in addition, switches over the sensor coil (8) between two operating voltages and which can be controlled by means of the measurement frequency (f1) emitted by the first comparator (1), and that the coil and threshold value change-over switch (7) is also connected to a second comparator (13), which is a component of the second resistance/inductance oscillator (7, 13-19), one input (19) of which, like one input (10) of the first comparator (1), is connected to the sensing resistance (9) and the switching threshold of which can be changed over by means of the coil and threshold value change-over switch (7), and that the coil and threshold value change-over switch (7), depending on the position of the controlled change-over device (12), can be switched over with the measurement frequency (f1) or with the auxiliary frequency (f2) derived from the output (20) of the second resistance/inductance oscillator (7, 13-19).

8. Circuit according to Claim 7, characterized in that a first voltage divider determining the switching threshold of the first comparator (1) exhibits two divider resistances (4, 5), with in each case one of which a first hysteresis resistance (6) can be connected in parallel via the coil and threshold value change-over switch (7), and that a second voltage divider determining the switching threshold of the second comparator (13) exhibits two divider resistances (16, 17), with in each case one of which a second calibratable hysteresis resistance (18) can be connected in parallel via the coil and threshold value change-over switch (7), and that the second hysteresis resistance (18) is adjusted to a defined ratio between the measurement frequency (f1) and the auxiliary frequency (f2).

9. Circuit according to Claim 8, characterized in that the divider resistances (4, 5 and 16, 17 respectively) and the hysteresis resistance (6 and 18 respectively) are constructed in thick film, thin film or monolithic design as integrated resistances on a chip, and that the second hysteresis resistance (18) can be calibrated by means of a laser.

10. Circuit according to one of the preceding claims, characterized in that the means (36) for correcting the measurement frequency (f1) are set up for determining the correction factor

$$KF = 1 + \left( \frac{f_1\,\vartheta}{f_2\,\vartheta} - S \right) \cdot K$$

where

$f_1\,\vartheta$ is the measurement frequency at an ambient temperature $\vartheta$,

$f_2\,\vartheta$ is the auxiliary frequency at $\vartheta$,

$$S = \frac{f_1\,\vartheta_0}{f_2\,\vartheta_0},$$

where $\vartheta_0$ is a temperature at which the calibration has been performed, and

K is a circuit constant,

the measurement frequency being multiplied by the correction factor KF for determining the corrected output measurement frequency.

## Revendications

1. Circuit pour compenser l'effet de la température dans un convertisseur de mesure qui convertit une course en une fréquence de mesure, comportant un premier oscillateur à résistance et à inductance (1-9) qui comprend, en tant qu'éléments influençant la fréquence de mesure (f1), une bobine détectrice (8) en série avec une résistance sensible (9), caractérisé en ce que la bobine détectrice (8) et la résistance

# 0 146 679

sensible (9) sont des éléments, influençant la fréquence, d'un second oscillateur (7, 13-19) au moyen duquel peut être produite une fréquence auxiliaire (2), étant précisé que, dans des moyens électroniques (36) prévus pour corriger la fréquence de mesure à partir du rapport de la fréquence de mesure (f1) à la fréquence auxiliaire (f2), on peut former un facteur de correction fonction de la température et on peut produire une fréquence de mesure de sortie corrigée par le facteur de température.

2. Circuit selon la revendication 1, caractérisé en ce que le second oscillateur est un oscillateur (7, 13-19) à résistance et à inductance ; en ce que la fréquence auxiliaire s'écarte de la fréquence de mesure (f1) ; et en ce que, grâce à un dispositif de commutation (12), les moyens (36) prévus pour corriger la fréquence de mesure (f1) sont sollicités au choix soit par la fréquence de mesure, soit par la fréquence auxiliaire.

3. Circuit selon la revendication 2, caractérisé par un dimensionnement du premier oscillateur (1-9) à résistance et à inductance et du second oscillateur (7, 13-19) à résistance et à inductance tel que la fréquence de mesure (f1) est supérieure à la fréquence auxiliaire (2).

4. Circuit selon la revendication 3, caractérisé par un dimensionnement du premier oscillateur (1-9) à résistance et à inductance et du second oscillateur (7, 13-19) à résistance et à inductance tel que la fréquence de mesure (f1) atteint le double de la fréquence auxiliaire (f2).

5. Circuit selon l'une des revendications précédentes, caractérisé en ce que le dispositif de commutation (12) peut être commandé par un calculateur de correction (36) alimenté au choix par la fréquence de mesure (f1) ou par la fréquence auxiliaire (f2).

6. Circuit selon l'une des revendications précédentes, caractérisé en ce que les deux oscillateurs (1-9 ; 13-19) à résistance et à inductance sont sollicités par toutes les tensions d'exploitation, indépendamment de la position du dispositif de commutation (12) commandé ; et en ce qu'un circuit de résistance d'entrée de celui des deux oscillateurs (1-9 ; 7, 13-19) à résistance et à inductance, qui, en fonction de la disposition du dispositif de commutation (12), ne sollicite pas les moyens (36) de façon à déterminer la fréquence, est sollicité par l'autre des deux oscillateurs (7, 13-19 ; 1-9) à résistance et à inductance.

7. Circuit selon l'une des revendications précédentes, caractérisé en ce que le premier oscillateur (1-9) à résistance et à inductance présente un premier comparateur (1) dont l'une des entrées (10) est reliée à la résistance sensible (9) et dont le seuil de commutation peut commuter entre deux valeurs au moyen d'un commutateur (7) de bobine et de valeur de seuil, qui commute en outre la bobine détectrice (8) entre deux tensions d'exploitation et qui peut être commandé par la fréquence de mesure (f1) émise par le premier comparateur (1) ; et en ce que le commutateur (7) de bobine et de valeur de seuil est en outre relié à un second comparateur (13), qui fait partie du second oscillateur (7, 13-19) à résistance et à inductance, dont l'une des entrées (19) est reliée, de même que l'entrée (10), mentionnée, en premier lieu, du premier comparateur (1), avec la résistance sensible (9) et dont le commutateur (7) de bobine et de valeur de seuil peut commuter la valeur de seuil ; et en ce que le commutateur (7) de bobine et de valeur de seuil peut, selon chaque fois la position du dispositif de commutation commandé (12), commuter sur la fréquence de mesure (f1) ou sur la fréquence auxiliaire (f2) émise par la sortie (20) du second oscillateur (7, 13-19) à résistance et à inductance.

8. Circuit selon la revendication 7, caractérisé en ce qu'un premier diviseur de tension, qui détermine le seuil de commutation du premier comparateur (1), présente deux résistances partielles (4, 5), en parallèle avec respectivement l'une desquelles peut être mise une première résistance d'hystérésis (6), par l'intermédiaire du commutateur (7) de bobine et de valeur de seuil ; et en ce qu'un second diviseur de tension, qui détermine la valeur de seuil du second comparateur (13), présente deux résistances partielles (16, 17), en parallèle avec respectivement l'une desquelles peut être mise une seconde résistance d'hystérésis, (18) réglable, par l'intermédiaire du commutateur (7) de bobine et de valeur de seuil ; et en ce que la seconde résistance d'hystérésis (18) est déterminée pour donner un rapport défini entre la fréquence de mesure (f1) et la fréquence auxiliaire (f2).

9. Circuit selon la revendication 8, caractérisé en ce que les résistances partielles (4, 5 ou 6, 7) et la résistance d'hystérésis (16 ou 18) sont conçues sous forme de résistances intégrées sur une plaquette en exécution en couche épaisse, en couche mince ou monolithique ; et en ce que la seconde résistance d'hystérésis (18) peut être réglée au moyen d'un laser.

10. Circuit selon l'une des revendications précédentes, caractérisé en ce que les moyens (36) prévus pour corriger la fréquence de mesure (f1) sont arrangés pour déterminer le facteur de correction KF

$$KF = 1 + \left( \frac{f_1\,\vartheta}{f_2\,\vartheta} - S \right) \cdot K$$

avec

$f_1\,\vartheta$, fréquence de mesure à température ambiante

$f_2\,\vartheta$ fréquence auxiliaire à $\vartheta$

$$S = \frac{f_1\,\vartheta_0}{f_2\,\vartheta_0},$$

9

$\vartheta_0$ étant la température à laquelle a été effectué le réglage et

K constante spécifique du circuit,

- étant précisé que pour déterminer la fréquence de mesure de sortie corrigée, on multiplie la fréquence de mesure par le facteur de correction KF.

**FIG.1**

FIG. 2

FIG. 3

FIG. 4

FIG.5

FIG. 6